Europäisches Patentamt

European Patent Office

Office européen des brevets

(19)

(11) Publication number: **0 170 294**
**B1**

## EUROPEAN PATENT SPECIFICATION

(12)

(45) Date of publication of patent specification: **14.09.88**

(51) Int. Cl.⁴: **F 24 F 11/04,** G 05 D 11/035, F 24 F 11/053

(21) Application number: **85110173.3**

(22) Date of filing: **11.05.81**

(60) Publication number of the earlier application in accordance with Art. 76 EPC: **0 040 086**

(54) Improved tracking controller.

(30) Priority: **12.05.80 US 148571**

(43) Date of publication of application:
**05.02.86 Bulletin 86/06**

(45) Publication of the grant of the patent:
**14.09.88 Bulletin 88/37**

(84) Designated Contracting States:
**BE DE FR GB IT NL SE**

(56) References cited:
FR-A- 893 182
US-A-2 134 745
US-A-2 349 521
US-A-4 097 219

(73) Proprietor: **ANEMOSTAT PRODUCTS DIVISION DYNAMICS CORPORATION OF AMERICA**
**888 North Keyser Avenue**
**Scranton Pennsylvania (US)**

(72) Inventor: **Harris, William John**
**R.D. 4 Box 84A**
**Tunkhannock Pennsylvabia 18657 (US)**
Inventor: **Waeldner, William John**
**Longview Terrace**
**Waverly Pennsylvania 18471 (US)**

(74) Representative: **Archer, Philip Bruce et al**
**Urquhart-Dykes & Lord Trinity Court Trinity Street Priestgate**
**Peterborough Cambridgeshire PE1 1DA (GB)**

EP 0 170 294 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

## Background of the invention

The present invention relates to a tracking controller for use in an air conditioning system having at least two duct sections in which each duct section has an associated damper for regulating the air flow therethrough.

Conventional air conditioning systems may include controllers, and generally such controllers are of the pneumatic type. These controllers employ duct or independent supply air in the control and operation of a pneumatic actuator which moves a flow regulating damper in response to the demands of the controller. A differential pressure across a fixed orifice is conventionally employed to provide a flow variable signal representing flow in the duct section associated with the damper, the differential pressure being applied across a diaphragm for operating a push rod or other output member in a pneumatic-mechanical motion transducer. The push rod is operatively associated with a pivotally supported lever which is also influenced by a reference or bias signal provided by an adjustable reference means normally in the form of a spring engaging the lever. When temperature control or temperature reset is introduced, a pneumatic thermostat is usually employed with a pneumatic-mechanical motion transducer having a push rod or other output member acting in opposition to a bias or reset spring. The temperature or other air condition signal is combined with the aforesaid reference or bias signal to provide a composite signal acting on the lever in opposition to the push rod or other output member of the flow or differential pressure transducer. The temperature or other air condition control or reset signal may be transmitted to the reference or bias spring by a second pivotally supported lever.

The first mentioned lever of the controller provides a resultant signal at a control orifice which may comprise a flow variable signal compared against a reference or bias signal or a flow variable signal compared against a composite signal comprising the reference or bias signal and a temperature or other air condition signal. The control orifice thus establishes a pneumatic actuator operating pressure for movement and control of the damper for the maintenance of desired flow or volume conditions in the duct and for reset operation in accordance with the temperature or other air condition signal.

Controllers of the type described operate efficiently in regulating conditions in a single duct, mixing or air distribution box. They do not, however, efficiently meet requirements where two or more duct sections, mixing or distribution boxes must be coordinated in their air flow or volume control. For example, where supply and exhaust ducts or boxes require coordinated flow control, independent control by two or more controllers of the type described may result in excessive variation and departure from the desired coordinated flow conditions. Reference or bias and reset springs, lever pivot friction, transducer push rod friction, etc., result in inaccuracies unacceptable for certain applications. Further, the necessary flexibility in coordinating air flow or volume is lacking. A one-to-one flow rate might be practical with a pair of independent controllers if ideal conditions prevail in the design and manufacture of the controllers but various other flow ratios would be difficult if not impossible to achieve with the necessary degree of accuracy. Many applications require flow ratios other than one-to-one.

Similar difficulties may arise with devices disclosed in DE—A—2827976 and DE—C—944332.

DE—A—2827976 discloses a device for regulating the intensity of an auxiliary air flow and a main flow of conditioned air at above atmospheric pressure. This device comprises a suction mixing chamber having a first inlet for the main air flow, a second inlet for the auxiliary air flow and an outlet for the mixture formed from the two air flows. A suction device sucks auxiliary air into the mixing chamber in dependence on the intensity of the main air flow. A first damping device adjusts the intensity of the main air flow entering the mixing chamber, and a second damping device adjusts the intensity of the auxiliary air flow. An actuating device adjusts the first damping device and a flow meter controls this actuating device to ensure that the intensity of the main air flow is kept constant.

In DE—C—944332 there is disclosed a device for automatically maintaining a constant quantative ratio between two gaseous media taking account of the temperature of one or both media. This device is particularly concerned with maintaining constant proportions of gas and hot air in industrial gas furnaces, taking account of the hot-air temperature. The device uses a flow divider as an air quantity sensor with a main orifice plate and an auxiliary orifice plate behind which the pressure is kept the same as the pressure behind the main orifice plate by means of a pressure regulator plate.

The auxiliary orifice plate is directly connected to a pipe supplying hot air and a cooling device is located between the auxilary orifice plate and a pressure regulator to keep the partial air stream at a uniform temperature.

DE—C—944332 describes a tracking controller for use in a system having first and second duct sections, the latter with an associated damper for regulating air flow therethrough. The tracking controller comprises first and second sensors respectively for producing first and second flow variable signals responsive respectively to flow conditions in said first and second duct section. First and second transducers are provided respectively to receive said first and second signals and with output elements acting in opposition to each other. A signal comparison and transmitting means is acted on in opposition by said output elements and is thus operable to receive and compare said two flow variable signals and to provide a resultant signal. A pneumatic actuator for said damper in said second duct section is operable to receive said resultant signal and to position said damper in response thereto.

The invention is particularly concerned with a tracking controller for use in an air conditioning control system as disclosed in EP—A—0 040 086.

In FR—A—893 182 there is disclosed a tracking controller as defined in the precharacterizing portion of claim 1 hereof.

It is an object of the invention to provide a tracking controller capable of use with a variety of types of master controllers and in other systems without master controllers but where coordinated flow in two or more duct sections is required.

Accordingly the present invention provides a tracking controller (12) in an air conditioning system having first and second duct sections (14, 86), the latter with an associated damper (84) for regulating air flow therethrough; said tracking controller (12) comprising first and second sensors respectively for producing first and second flow variable signals responsive respectively to flow conditions in said first and second duct sections (14, 86), first and second transducers (108, 112) respectively to receive said first and second signals and with output elements acting in opposition to each other, a signal comparison and transmitting means (98, 102, 104) including a movable lever (98) acted on in opposition by said output elements and thus operable to receive and compare said two flow variable signals and to provide a resultant signal, a pneumatic actuator (80) for said damper (84) in said second duct section (86) operable to receive said resultant signal and to position said damper (84) in response thereto and a bleed type control orifice (96) operatively associated with said lever (98) for provision of said resultant signal in pneumatic form for transmission to said actuator (80), characterised by said transducers (108, 112) each comprising housing and diaphragm assemblies mounted on a common base (132) but with one of said transducers (108) being adjustably mounted on the base (132) for adjustment relative to the other of said transducers (112) and said lever (98), the output member of said adjustable transducer (108) being movable in one and an opposite direction along the length of said lever (98) as a result of said adjustment of said adjustable transducer (108).

The adjustable transducers (108, 112) may be slidably mounted on the base (132).

Thus, the pressure differential or flow maintained in the first duct section by a master controller is employed as a reference in the tracking controller against the differential or flow in the second duct section. Accurate tracking operation is thus provided for and the desired coordinated operation of the controllers and their actuators and dampers results. Temperature or other air condition signals may also be introduced to the master controller and the effect thereof upon flow in the first duct section will be reflected through the tracking controller to the flow in the second duct section.

When the tracking controller is used without a master controller, close coordination of flow in two or more duct sections is achieved irrespective of factors affecting flow conditions in a selected master duct.

Adjustability of the effect of the first and second flow variable signals on the resultant signal in the tracking controller is provided for so that desired flow ratios may be established between two duct sections, boxes, etc., with the tracking operation of the controller serving to maintain such ratios despite changing flow conditions in the first duct section or box.

Brief description of the drawings

Figure 1 of the drawings is a schematic illustration illustrating master and tracking controllers and associated elements in an air conditioning system as disclosed in EP—A—0 040 086.

Figure 2 is a top view of a tracking controller constructed in accordance with the present invention, diaphragm assemblies thereof being partially broken away.

Figure 3 is a vertical sectional view of the controller taken generally as indicated at 3—3 in Figure 2.

Preferred embodiments of the invention

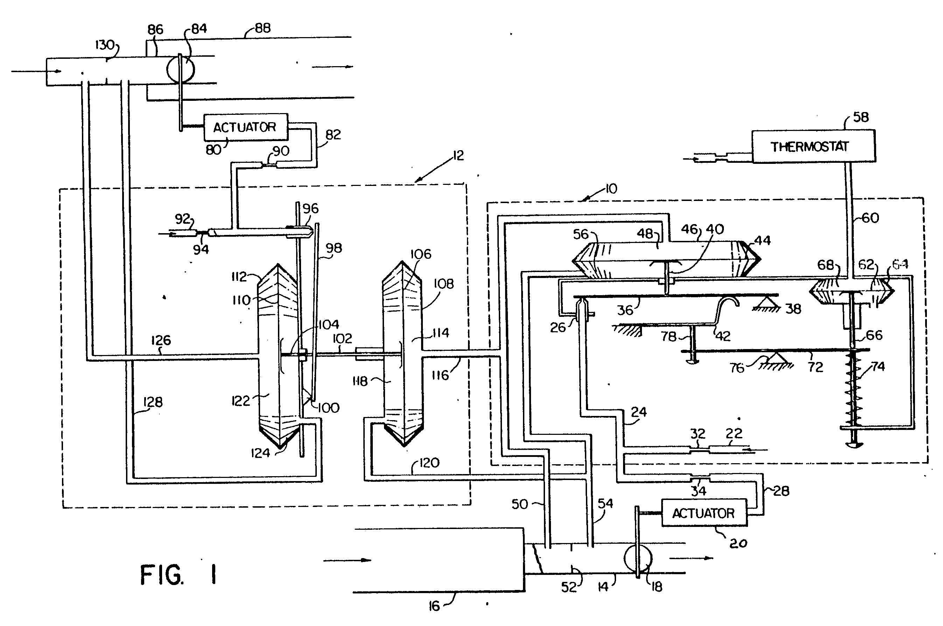

Referring to Figure 1 a master controller is indicated generally at 10 and a tracking controller at 12. A first duct section 14 shown exiting from a mixing or distribution box 16 has a damper 18 disposed therein and operated by a pneumatic actuator 20. A supply of actuator and control air is introduced from a regulated source at 22 and a conduit 24 extends to control orifice 26 within the controller 10. The supply conduit 22 also has a branch conduit 28 extending to actuator 20 and restrictions 32, 34 are provided respectively in the conduits 22, 28. Restriction 32 permits pressure change to occur within the actuator 20 reflecting the out flow condition at control orifice 26 while restriction 34 may serve a damping function with regard to operation of the actuator 20.

The pressure established in actuator 20 responsive to the out flow condition at control orifice 26 may be regarded as a "resultant signal" operating the actuator 20 and the damper 18 within the duct section 14. Control of the out flow at the orifice and actuator pressure is provided for by a first lever 36 pivoted at 38 and acted upon by push rod or output member 40 and leaf spring 42. The push rod 40 responds to a diaphragm 44 in a diaphragm assembly 46 comprising a pneumatic-mechanical motion transducer. Upper chamber 48 in diaphragm assembly 46 receive air under pressure from duct 14 via conduit 50 upstream of a fixed orifice 52 in the duct section. Conduit 54 carries air under pressure from the downstream side of the orifice 52 to lower chamber 56 in the diaphragm assembly 46. Thus, it will be apparent that a differential pressure or flow variable signal is provided to the diaphragm assembly 46 for conversion to a mechanical motion signal at the push rod 40.

The spring 42 comprises an adjustable reference or bias spring acting in opposition to the push rod 40 and forms a part of a signal comparison and transmitting means for comparing the flow variable signal against the reference or bias signal and for establishing a lever position and out flow condition at the control orifice 26.

An air condition signal is preferably also employed in operation of the master controller 10 and a thermostat 58 may be of a conventional pneumatic type and situated in a room or other space conditioned by air supplied or exhausted by the duct section 14. An air pressure or pneumatic signal in conduit 60 represents an air condition signal applied to diaphragm 62 in diaphragm assembly 64 and converted to a mechanical motion signal at push rod or output member 66. The air pressure signal acts in upper chamber .68 and may be opposed by atmospheric pressure in lower chamber 70 of the diaphragm assembly or pneumatic-mechanical motion transducer. Push rod 66 engages a lever 72 in opposition to a spring 74 which may be referred to as a temperature or air condition reset spring. The lever 72 is pivoted at 76 and connected at an opposite end portion with spring engageable member 78.

From the foregoing it will be apparent that a temperature or other air condition signal is provided and is effected through a signal combining means comprising push rod 66, reset spring 74, lever 72, element 78, at the leaf spring 42 whereby to provide a composite signal to the first lever 36. That is, the composite signal of the leaf spring 42 includes the reference or bias signal of the spring and the temperature or other air condition signal. Adjustment may be provided at the element 78 and the reset spring 74.

As will be apparent, the master controller 10 will operate to establish and maintain a flow condition in the duct section 14 in accordance with the adjusted position of the element 48 and the spring 42. In the event of varying supply or upstream pressure, the controller will act to maintain the desired flow condition and, when temperature or other air condition control is included as illustrated, the flow will be reset in accordance with the temperature or other condition signal as reflected in the composite signal reaching the lever 36 via the spring 42. Efficient flow or volume control is thus exercised in the duct section 14.

The tracking controller 12 operates a second pneumatic actuator 80 in accordance with a second "resultant signal" in line 82 to control the position of a second damper 84 in a duct section 86 entering a mixing or distribution box 88. The conduit 82 includes a restriction 90 and extends to a supply conduit 92 including a restriction 94. The supply conduit 92 receives a regulated supply of actuator and control air and extends to a second control orifice 96 associated with a second control lever 98. The lever 98 is pivoted at 100 and is acted upon and in opposition by first and second push rods or output members 102, 104. The push rod 102 is controlled by diaphragm 106 in diaphragm assembly 108 and the push rod 104 is controlled by a diaphragm 110 in diaphragm assembly 112. Right hand chamber 114 in the diaphragm assembly 108 receives air under pressure from branch conduit 116 extending from the aforementioned conduit 50 on the upstream side of fixed orifice 52 in duct section 14. Lefthand chamber 118 in the diaphragm assembly or pneumatic-mechanical motion transducer 108 receives air under pressure from a conduit 120 extending to the aforementioned conduit 54 opening on the downstream side of fixed orifice 52 in duct section 14. Thus, the push rod 102 reflects a flow variable signal for the first duct section 14.

The push rod 104 reflects a second flow variable signal for the duct section 86 and has left and right hand chambers 122 124 respectively connected with conduits 126 and 128. The conduit 126 extends to the upstream side of a fixed orifice 130 in the second duct section 186 and the conduit 128 opens in the duct section 186 at the downstream side of the said fixed orifice.

As will be apparent, the flow in the duct section 14 as established by the master controller 10 will serve as a reference for the tracking controller 12, said flow being reflected at the push rod 102 in the mechanical motion form of the first flow variable signal. The push rod 104 reflects in mechanical motion form the second flow variable signal of the duct section 86 and such signals act in opposition on the lever 98 whereby they are compared and transmitted by such second signal comparison and transmitting means to provide a second resultant signal at the control orifice 96 and the conduit 82 to the actuator 80. The restriction 94 permits the control orifice 96 to establish air pressure as a resultant signal in the line 82 and the restriction 90 may serve a damping function. The actuator 80 in turn controls the damper 84 in the second duct section 86 as established by the tracking controller.

As will be apparent the tracking controller 12 will, operate to efficiently track the flow condition in the duct section 14 and to establish and maintain a coordinated flow condition in the second duct section 86. The flow ratio may be one-to-one or may be established at other desired ratios by adjustment means to be described hereinbelow. As illustrated the duct section 86 and the mixing or distribution box 88 may for example be on the supply side of a laboratory or other space requiring a negative pressure with respect to surrounding area. The box 16 and duct section 14 may for example be disposed on the exhaust side of the laboratory space and the two boxes or duct sections may be set up to provide for shut off of the supply side and full open conditions at the exhaust side in the event of failure of actuator and control air to the controllers. Thus, negative pressure will be maintained as desired in the laboratory space during operation of the controllers and even on failure thereof.

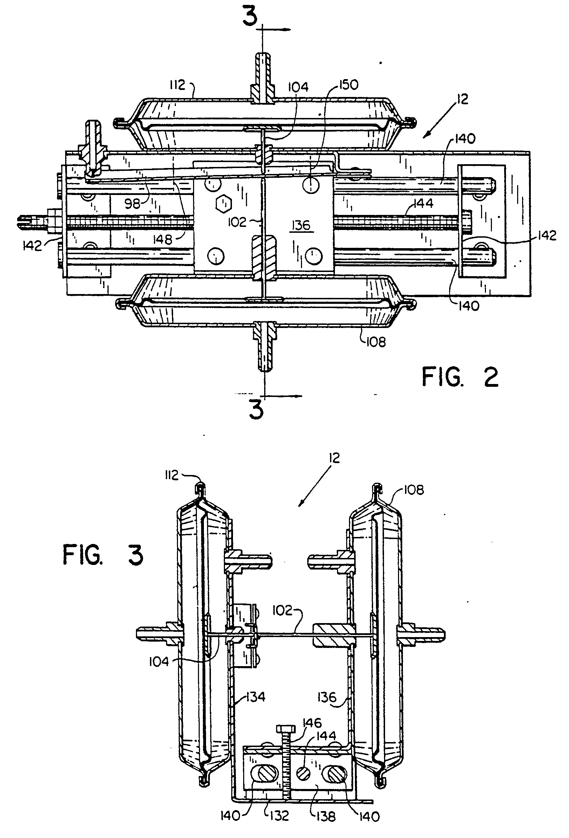

Referring now particularly to Figures 2 and 3, it will be observed that the mechanical embodiment of the tracking controller 12 includes a base member 132 directly supporting diaphragm assembly 112 by means of a bracket 134. The base member 132 also indirectly supports the diaphragm assembly 108 by means of a sliding bracket 136. The sliding bracket 136 has depending flanges 138 at each end thereof which slidably receive first and second slides or slide rods 140, 140. The slide rods 140, 140 are secured at end portions in brackets 142, 142 and a lead screw 144 may be provided for ease and convenience in adjustment of the bracket 136 along the rods. The lead screw 144 is journaled in the brackets 142, 142 and threadably received in the flanges 138, 138 so that rotation thereof will result in translation of the bracket 136. A binder screw 146 serves to secure the bracket 136 in an adjusted position along the base or frame member 132.

As will be apparent, the diaphragm assembly 108 may be adjusted along the length of the base of the frame member 132 on the bracket 136 so as to adjust the position of its push rod 102 along the length of lever 98, Figure 2. As shown, the push rod 102 is aligned with an opposite push rod 104 and this provides for a one-to-one flow ratio when the tracking controller 12 is used in combination with a master controller 10 as illustrated and described in Figure 1. Line 148 in Figure 2 illustrates the position of the push rod 102 for a two-to-one flow ratio and line 150 illustrates the position of the push rod for a one-half-to-one flow ratio. Obviously, any desired flow ratio may be selected merely by properly positioning the bracket 136 and the diaphragm assembly 108 along the slide rods 140, 140.

With the tracking controller adapted for adjustability as described, it will be apparent that precise and accurate tracking can be provided for between flow conditions in a first or master duct and a second or tracking duct. Further, adjustability of flow ratios is easily and conveniently provided for in the mere adjustment of the diaphragm assembly 108 and its push rod 102 relative to the push rod 104. Still further, a plurality of tracking controllers may be employed with a single master controller or master duct in the manner illustrated and described for the single tracking controller 12.

**Claims**

1. A tracking controller (12) in an air conditioning system having first and second duct sections (14, 86), the latter with an associated damper (84) for regulating air flow therethrough; said tracking controller (12) comprising first and second sensors respectively for producing first and second flow variable signals responsive respectively to flow conditions in said first and second duct sections (14, 86), first and second transducers (108, 112) respectively to receive said first and second signals and with output elements acting in opposition to each other, a signal comparison and transmitting means (98, 102, 104) including a movable lever (98) acted on in opposition by said output elements and thus operable to receive and compare said two flow variable signals and to provide a resultant signal, a pneumatic actuator (80) for said damper (84) in said second duct section (86) operable to receive said resultant signal and to position said damper (84) in response thereto, and a bleed type control orifice (96) operatively associated with said lever (98) for provision of said resultant signal in pneumatic form for transmission to said actuator (80), characterised by said transducers (108, 112) each comprising housing and diaphragm assemblies mounted on a common base (132) but with one of said transducers (108) being adjustably mounted on the base (132) for adjustment relative to the other of said transducers (112) and said lever (98), the output member of said adjustable transducer (108) being movable in one and an opposite direction along the length of said lever (98) as a result of said adjustment of said adjustable transducer (108).

2. A tracking controller according to claim 1, characterised in that said adjustable transducer (108) is slidably mounted on the base (132).

**Patentansprüche**

1. Nachlauf-Regler (12) in einer Klimaanlage mit einer ersten und einer zweiten Luftführung (14, 86), von denen letztere eine Klappe (84) zur Regulierung des Luftstromes enthält, wobei der Nachlauf-Regler (12) einen ersten und einen zweiten Sensor zur Erzeugung von ersten und zweiten, Änderungen der Strömungsbedingungen in der ersten und zweiten Luftführung (14, 86) anzeigenden Signalen sowie erste und zweite Meßumformer (108, 112) zum Erfassen der jeweils entsprechenden ersten und zweiten Signale mit einander entgegengesetzt arbeitenden Ausgangselementen aufweist, mit einer Einrichtung zum Signalvergleich und zur Signalübertragung (98, 102, 104) mit einem von den Ausgangselementen in entgegengesetzter Richtung beaufschlagten beweglichen Hebel (98) zum Erfassen beider Variablen der Strömungsbedingungen zwecks deren Vergleiches und Bildung eines resultierenden Ausgangssignals, mit einem der Klappe (84) in der zweiten Luftführung (86) zugeordneten pneumatischen Betätigungsglied (80), welches das resultierende Ausgangssignal aufnimmt und eine entsprechende Einstellung der Klappe (84) veranlaßt, und mit einer dem Hebel (98) wirkungsmäßig zugeordneten, das resultierende Ausgangssignal als Pneumatiksignal an das Betätigungsglied (80) übertragenden düsenförmigen Steueröffnung (96), dadurch gekennzeichnet, daß die Meßumformer (108, 112) jeweils ein Gehäuse und eine Membraneinrichtung aufweisen, die auf einer gemeinsamen Grundplatte (132) angeordnet sind, wobei einer der Meßumformer (108) auf der Grundplatte (132) in bezug auf den anderen Meßumformer (112) und den Hebel (98) einstellbar angeordnet ist, und daß das Ausgangsglied des einstellbar angeordneten Meßumformers (108) in gegenläufiger Richtung über die Länge des Hebels (98) als Folge der Einstellung des einstellbaren Meßumformers (108) bewegbar ist.

2. Nachlauf-Regler nach Anspruch 1, dadurch gekennzeichnet, daß der einstellbare Meßumformer (108) auf der Grundplatte (132) verschiebbar angeordnet ist.

## Revendications

1. Régulateur dépendant ou asservi (12) pour un système de climatisation comprenant un premier et un deuxième éléments de conduit (14, 86), ce dernier élément de conduit comportant un volet associé (84) pour régler le débit d'air dans ce conduit; ledit régulateur dépendant (12) comprenant un premier et un deuxième capteurs respectivement pour produire des premiers et deuxièmes signaux variables de débit en réponse respectivement aux conditions de débit dans lesdits premier et deuxième éléments de conduit (14, 86), un premier et un deuxième transducteurs (108, 112) respectivement pour recevoir lesdits premiers et deuxièmes signaux et dont les éléments de sortie agissent en opposition mutuelle, des moyens de comparaison et de transmission de signal (98, 102, 104) comportant un levier mobile (98) sur lequel lesdits éléments de sortie agissent en opposition et qui peut ainsi recevoir et comparer lesdits deux signaux variables de débit et fournir un signal résultant, un actionneur pneumatique (80) pour ledit volet (84) dans ledit deuxième élément de conduit (86) qui peut recevoir ledit signal résultant et positionner ledit volet (84) en réponse à ce signal, et un orifice de réglage du type à échappement (96) fonctionnellement associé audit levier (98) pour fournir ledit signal résultant sous forme pneumatique afin de le transmettre audit actionneur (80), caractérisé en ce que lesdits transducteurs (108, 112) comprennent des dispositifs respectifs à boîtier et membrane montés sur une base commune (132) mais l'un desdits transducteurs (108) étant monté de façon réglable sur la base (132) pour un adjustement par rapport à l'autre desdits transducteurs (112) et audit levier (98), l'élément de sortie dudit transducteur réglable (108) étant déplaçable dans un sens et dans l'autre sur la longueur dudit levier (98) avec comme résultat dudit ajustement dudit transducteur réglable 108.

2. Régulateur dépendant suivant la revendication 1, caractérisé en ce que ledit transducteur réglable (108) est monté de façon coulissante sur la base (132).

FIG. I

THERMOSTAT

ACTUATOR

ACTUATOR

FIG. 2

FIG. 3